# EUROPÄISCHE PATENTSCHRIFT

(11) **EP 1 932 456 B1**
(45) Veröffentlichungstag und Bekanntmachung des Hinweises auf die Patenterteilung: **01.12.2010**
(21) Anmeldenummer: 07122070.1
(22) Anmeldetag: 03.12.2007
(51) Int. Cl.: A47J 31/36, A47J 31/46

(54) **Brüheinheit für eine Kaffeemaschine sowie Kaffeemaschine**
Brewing device for a coffee machine and coffee machine
Unité d'échaudage pour une machine à café, ainsi que machine à café

(30) Priorität: 15.12.2006 DE 202006018947 U
(43) Veröffentlichungstag der Anmeldung: 18.06.2008
(73) Patentinhaber: WIK Far East Ltd., Hong Kong (CN)
(72) Erfinder: Steckhan, Markus, 45481, Mülheim (DE)
(74) Vertreter: Haverkamp, Jens

(56) Entgegenhaltungen:
- EP-A- 0 073 739
- EP-A- 1 016 364

## Beschreibung

Die Erfindung betrifft eine Brüheinheit für eine Kaffeemaschine mit einer beim Brühvorgang das gemahlene Kaffeepulver enthaltenden Brühkammer, mit einer in die Brühkammer mündenden Heißwasserzuführung und mit einer den gebrühten Kaffee abführenden Kaffeeauslaufleitung. Des Weiteren betrifft die Erfindung eine mit einer solchen Brüheinheit ausgestattete Kaffeemaschine.

Kaffeemaschinen, mit denen portionsweise, beispielsweise tassenweise, frisch gebrühter Kaffee bereitet werden kann, verfügen über eine Brüheinheit. Diese umfasst einen Brühzylinder, in die nach dem Starten eines Brühzyklus gemahlenes Kaffeepulver eingebracht, darin verdichtet und anschließend Heißwasser hindurch geführt wird, bevor das ausgelaugte Kaffeemehl aus dem Brühzylinder ausgestoßen wird. Je nach Konzeption der Brüheinheit verfügt diese über zumindest zwei bewegliche Elemente, wobei es sich bei diesen um zwei gegeneinander bewegliche Kolben oder um einen Kolben und einen Brühzylinder handeln kann. Es sind auch Brüheinheiten bekannt geworden, in denen sowohl die beiden Kolben als auch der Brühzylinder gegeneinander beweglich sind. Zum Bewegen der vorgenannten Elemente der Brüheinheit dient eine Antriebseinrichtung, deren Antriebskraft auf eines oder mehrerer der bewegbaren Elemente wirkt. Zum Zuführen des Heißwassers dient eine innerhalb der Kaffeemaschine angeordnete Pumpe. Kaffeemaschinen, mit denen ein Espressokaffee bereitet werden soll, verfügen über Pumpen zum Zuführen des Heißwassers, die einen Druck von etwa 16 bar bereitstellen können. An die Pumpe angeschlossen ist eine Heißwasserzuführung. Ist die Brüheinheit aus der Kaffeemaschine herausnehmbar, ist in die Heißwasserzuführung eine Leitungskupplung eingeschaltet. Die Heißwasserzuführung mündet in die Brühkammer zumeist über einen der beiden Kolben, oftmals über dessen mit einer Siebplatte ausgerüsteten Kolbenboden. Zum Auslassen des gebrühten Kaffees trägt der die Brühkammer in der Brühstellung des Brühzylinders ausgangsseitig begrenzende Gegenkolben eine Siebplatte. Unmittelbar in Strömungsrichtung hinter der Siebplatte befindet sich ein Sammler, von dem eine Kaffeeauslaufleitung abgeht.

Für den Fall, dass die Kaffeemaschine zum Bereiten eines Espressokaffees konzipiert ist, ist in die Kaffeeauslaufleitung ein Crema-Ventil eingeschaltet. Eine solche Kaffeemaschine ist aus EP 0 073 739 A1 bekannt. Die in diesem Dokument beschriebene Kaffeemaschine offenbart die Merkmale des Oberbegriffes des unabhängigen Anspruchs. Durch das Crema-Ventil ist die Auslaufleitung grundsätzlich verschlossen. Das Crema-Ventil öffnet bei Überschreiten eines vorbestimmten Druckes. Dieses gewährleistet, dass aus der Brühkammer nur dann das gebrühte Kaffeegetränk ausfließt, wenn in dieser wenigstens der zum Öffnen des Crema-Ventils notwendige Druck herrscht. Beim Hindurchtreten des gebrühten Kaffeegetränks durch das Crema-Ventil erhält der gebrühte Espresso die gewünschte schaumartige Crema. Auch wenn sich mit einem solchen Crema-Ventil eine angenehm schaumige Crema erzielen lässt, wird das Vorhandensein größerer, bei der Crema-Bildung sich ausbildender Blasen als störend empfunden. Bei der aus EP 0 073 739 A1 bekannt gewordenen Kaffeemaschine verjüngt sich dem Crema-Ventil nachgeschaltet die Kaffeeauslaufleitung.

Der Geschmack des gebrühten Kaffeegetränks ist unter anderem abhängig von der Qualität des verwendeten Wassers. Beispielsweise verschlechtert sich der Geschmack eines Kaffeegetränkes, wenn das für die Kaffeebereitung verwendete Wasser sehr mineralreich, insbesondere kalkreich ist. Es wäre daher wünschenswert, wenn bei Verwendung insbesondere von kalkreichem Wasser zur Bereitung eines Kaffeegetränkes mit einer solchen Brüheinheit bzw. mit einer eine solche Brüheinheit aufweisenden Kaffeemaschine mit einfachen Mitteln der Kalkgehalt in dem gebrühten Kaffeegetränk reduziert werden könnte.

Aufgabe der Erfindung ist es daher, eine eingangs genannte Brüheinheit im Hinblick auf eine Verbesserung des beim Brühen eines Kaffeegetränkes gebildeten Cremas weiterzubilden.

Gelöst wird diese Aufgabe bei einer in der Auslaufleitung ein Crema-Ventil aufweisenden Brüheinheit dadurch, dass die Kaffeeauslaufleitung sich in Strömungsrichtung des Kaffees zu einer Engstelle hin konisch verjüngt und sich im Anschluss an die Engstelle konisch erweitert.

Diese Engstelle, die beispielsweise nach Art einer Venturi-Düse ausgebildet sein kann, sorgt, wenn im Rahmen eines Brühzyklusses Kaffee aus der Brühkammer ausfließt, aufgrund der dadurch bedingten ändernden Druck- und Fließgeschwindigkeitsverhältnisse in der Kaffeeauslaufleitung dafür, dass durch die Crema-Bildung entstandene Luftblasen, die eine bestimmte Größe überschreiten, in mehrere Luftblasen kleinerer Größe geteilt werden. Besonders gute Ergebnisse werden erzielt, wenn die Kaffeeauslaufleitung sich in Strömungsrichtung des Kaffees zur Engstelle hin konisch verjüngt und sich im Anschluss an die Engstelle konisch erweitert. Von Vorteil ist, wenn sich die Querschnittsfläche der Kaffeeauslaufleitung unmittelbar im Anschluss an die Engstelle sprunghaft oder quasi sprunghaft vergrößert, bevor diese in ihren typischen, sich allmählich konisch vergrößernden Abschnitt, übergeht. Als quasi sprunghafte Vergrößerung der Querschnittsfläche wird im Rahmen dieser Ausführungen eine in Strömungsrichtung gesehen auf kurzer Strecke rasche Querschnittsflächenvergrößerung verstanden.

Die Größe der aus der Engstelle austretenden Luftblasen ist abhängig von der Querschnittsfläche der Engstelle sowie dem Druck des eingangsseitig anstehenden Crema-Schaumes bzw. der Kaffeegetränkflüssigkeit. Man wird daher die Engstelle und seine Querschnittsfläche in Abstimmung mit dem Öffnungsdruck des Crema-Ventils und dem beim Brühen eines Kaffeegetränkes typischerweise verwendeten Pumpendruck abstimmen, um die maximale Größe der in der Crema enthaltenden Luftblasen zu definieren.

Vorteilhafterweise weist die Heißwasserzufuhr eine Engstelle auf. Diese Engstelle der Heißwasserzuführleitung befindet sich zweckmäßigerweise in einem der Brüheinheit zugeordneten Abschnitt der Heißwasserzuführung und bildet vorzugsweise die kleinste Querschnittsfläche innerhalb der gesamten Heißwasserzuführung aus. Die Engstelle in der Heißwasserzuführung bewirkt aufgrund der sich durch diese im Bereich dieser einstellenden Druck- und Fließgeschwindigkeitsänderungen des hindurch gepumpten Heißwassers, dass vor der Engstelle in gelöster Form transportierte Ionen, beispielsweise Ca²⁺, ausfallen und als Feststoffe in dem Heißwasser weiter mitgeführt werden. Für diese aus dem zugeführten Heißwasser ausgefällten Partikel stellt das gemahlene und innerhalb der Brühkammer durch die beiden Kolben verdichtete Kaffeepulver einen wirksamen Filter dar, an dem diese Partikel hängen bleiben und daher nicht in die Kaffeeauslaufleitung gelangen. Die Folge ist, dass das bereitete Kaffeegetränk einen gegenüber dem zugeführten Heißwasser reduzierten Mineralanteil aufweist, wodurch der Geschmack des bereiteten Kaffeegetränkes, insbesondere bei Verwendung von mineralreichem Wasser, verbessert ist. Von besonderem Vorteil bei dieser Maßnahme ist, dass das in der Brühkammer ohnehin befindliche und bei Verwendung eines Espressokaffees fein gemahlene und durch die Kolben verdichtete Kaffeepulver, gleichfalls die Funktion eines Filterelementes erhält, während die vorgeschaltete Engstelle für das Ausfällen von in dem Heißwasser in gelöster Form befindlichen Mineralien zuständig ist. Der Ausfällprozess wird begünstigt, wenn die Heißwasserzuführung sich in Strömungsrichtung des Heißwassers zur Engstelle hin konisch verjüngt und sich im Anschluss an die Engstelle konisch erweitert und damit nach Art einer Venturi-Düse ausgebildet ist. Auch eine sprunghafte Querschnittsflächenvergrößerung, wie zuvor zu der in der Kaffeeauslaufleitung beschriebenen Engstelle beschrieben, ist im Zusammenhang mit der für das Ausfällen verantwortlichen Engstelle in der Heißwasserzuführleitung zweckmäßig.

Hergestellt werden kann eine Engstelle, wie vorbeschrieben, in besonders einfacher Weise, wenn das die Engstelle umfassende Leitungsstück ein Kunststoffspritzgussteil ist und die beispielsweise aufeinander zulaufenden Verjüngungen durch entsprechend geformte Werkzeuge bereit gestellt werden können.

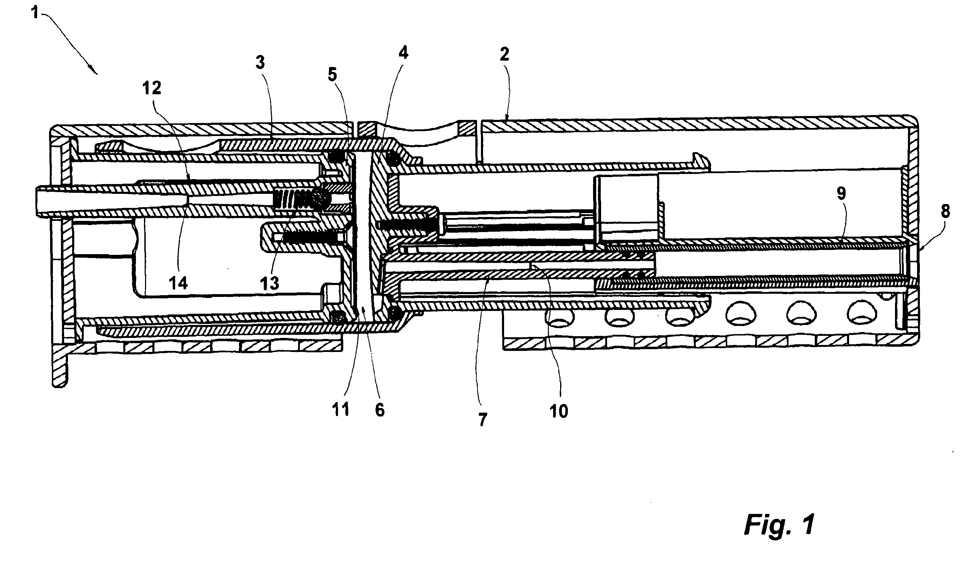

Nachfolgend ist die Erfindung anhand eines Ausführungsbeispiels unter Bezugsnahme auf die beigefügte Figur beschrieben. Figur 1 zeigt in einem schematisierten Längsschnitt eine Brüheinheit 1 für eine in der Figur nicht näher dargestellte Kaffeemaschine. Die Brüheinheit 1 ist in der Figur in der Brühstellung seiner beweglichen Elemente gezeigt. Die Brüheinheit 1 verfügt bei dem dargestellten Ausführungsbeispiel über ein Gehäuse 2, gegenüber dem ein Brühzylinder 3 und ein beweglicher Kolben 4 in längsaxialer Richtung verstellbar sind. In nicht näher dargestellter Weise ist bei der dargestellten Brüheinheit 1 der Brühzylinder durch einen Spindelantrieb in längsaxialer Richtung angetrieben. Der bewegliche Kolben 4 wird durch den Brühzylinder 3 bewegt. Dem beweglichen Kolben 4 bezüglich des Brühzylinders 3 gegenüber liegend ist an das Gehäuse 2 ein feststehender Kolben 5 angeschlossen. Zwischen den beiden Kolben 4, 5 ist die Brühkammer 6 als Teil des Brühzylinders 3 angeordnet. Die Brühkammer 6 wird in Abhängigkeit von der Menge des in den Brühzylinder 3 eingefüllten Kaffeepulvers durch die Kolbenböden der beiden Kolben 3, 4 definiert. In der Figur sind die beiden Kolben 3, 4 mit ihrem geringsten Abstand zueinander dargestellt. Diese ist in der in der Figur gezeigten Brühstellung in nicht näher dargestellter Art und Weise mit fein gemahlenem Kaffeepulver gefüllt. Durch den beweglichen Kolben 4 wird auf das Kaffeepulver gegen das Widerlager des feststehenden Kolbens 5 ein gewisser Druck ausgeübt, wodurch das eingefüllte Kaffeepulver verdichtet wird.

An die Rückseite des beweglichen Kolbens 4 ist ein Rohrstück 7 als Teil einer Heißwasserzuführung angeformt, dessen Eingang in die Brüheinheit 1 mit dem Bezugszeichen 8 gekennzeichnet ist. Das Rohrstück 7 mündet quasi unmittelbar im Bereich des Bodens des Kolbens 4 in die Brühkammer 6. Das Rohrstück 7 ist zum Gewährleisten der Beweglichkeit des Kolbens 4 teleskopartig in einem Metallrohr 9 abgedichtet geführt. In dem Rohrstück 7 befindet sich eine Engstelle 10. In Strömungsrichtung des zugeführten Heißwassers, für welche Zuführung die Kaffeemaschine eine Pumpe besitzt, verjüngt sich die Querschnittsfläche des Rohrstücks 7 in Richtung zur Engstelle 10 hin. Die Verjüngung erfolgt bei dem dargestellten Ausführungsbeispiel konisch, wobei die Konizität linear ist. Im Anschluss an die Engstelle vergrößert sich die Querschnittsfläche in Richtung zum Boden des beweglichen Kolbens 4 hin. Die Engstelle bildet aufgrund der vorbeschriebenen Ausgestaltung eine Venturi-Düse aus. Aufgrund der durch die Verjüngung und Erweiterung unter Ausbildung der Engstelle sich ändernden Verhältnisse im Druck und in der Fließgeschwindigkeit des zugeführten Heißwassers, fallen nach Durchschreiten der Engstelle 10 aus dem zugeführten Heißwasser in gelöster Form mitgeführte Ionen aus, vor allem dann, wenn das verwendete Wasser mineralreich, etwa kalkreich ist, die sodann als Feststoffpartikel an dem in der Brühkammer 6 befindlichen Kaffeepulver, dass die Funktion eines Filters übernimmt, hängen bleiben, mithin aufgefangen werden.

Der feststehende Kolben trägt an seiner die Brühkammer 6 begrenzenden Seite eine Siebplatte 11. In Strömungsrichtung hinter der Siebplatte 11 befindet sich eine als Sammler dienende Vertiefung, in die eine insgesamt mit dem Bezugszeichen 12 bezeichnete Kaffeeauslaufleitung mündet. Der feststehende Kolben 5 trägt rückseitig, in die Kaffeeauslaufleitung 12 eingeschaltet, ein Crema-Ventil 13. In Strömungsrichtung dem Crema-Ventil 13 nachgeschaltet verjüngt sich die Querschnittsfläche der Kaffeeauslaufleitung 12 konisch mit einem linearen Verjüngungswinkel bis zu einer Engstelle 14 hin. Im Anschluss an die Engstelle 14 vergrößert sich die Querschnittsfläche der Kaffeeauslaufleitung 12 mit linearem Verjüngungswinkel konisch. Unmittelbar im Anschluss an die Engstelle 14 ist die Querschnittsfläche gegenüber derjenigen der Engstelle 14 sprunghaft vergrößert, wie dieses durch den Absatz in der Kaffeeauslaufleitung 12 in der Figur erkennbar ist. Aufgrund der sich durch die Engstelle 14 und der die Engstelle 14 ausbildenden Abschnitte der Kaffeeauslaufleitung 12 sich ändernden Druck- und Fließgeschwindigkeitsverhältnisse werden der Engstelle 14 durch die durchfließende Flüssigkeit, insbesondere durchfließende Crema zugeführte Luftblasen, die eine bestimmte Größe überschreiten, in mehrere kleinere Luftblasen geteilt. Die gestufte Erweiterung der Querschnittsfläche im unmittelbaren Anschluss an die Engstelle 14 fördert die Teilung größerer Luftblasen infolge der sich sprunghaft ändernden Druck- und Fließgeschwindigkeitsverhältnisse innerhalb der Kaffeeauslaufleitung 12 beim Ausfließen der gebrühten Kaffeeflüssigkeit.

Aus der Beschreibung der Kaffeemaschine wird deutlich, dass mit einfachen Mitteln durch Vorsehen von Engstellen in der Heißwasserzuführung und/oder der Kaffeeauslaufleitung nicht unerhebliche Vorteile hinsichtlich der Qualität eines mit einer solchen Brüheinheit bzw. mit einer mit einer solchen Brüheinheit ausgestatteten Kaffeemaschine bereiteten Kaffeegetränkes erzielt werden.

### Bezugszeichenliste

- 1: Brüheinheit
- 2: Gehäuse
- 3: Brühzylinder
- 4: Beweglicher Kolben
- 5: Feststehender Kolben
- 6: Brühkammer
- 7: Rohrstück
- 8: Eingang
- 9: Rohr
- 10: Engstelle
- 11: Siegplatte
- 12: Kaffeeauslaufleitung
- 13: Crema-Ventil
- 14: Engstelle

## Patentansprüche

1. Brüheinheit (1) für eine Kaffeemaschine mit einer beim Brühvorgang das gemahlene Kaffeepulver enthaltenden Brühkammer (6), mit einer in die Brühkammer (6) mündenden Heißwasserzuführung (7, 9) und mit einer den gebrühten Kaffee abführenden Kaffeeauslaufleitung (12) mit einem darin eingeschalteten Crema-Ventil (13), wobei die Kaffeeauslaufleitung dem Crema-Ventil (13) nachgeschaltet eine Engstelle (14) aufweist, **dadurch gekennzeichnet, dass** die Kaffeeauslaufleitung (12) sich in Strömungsrichtung des Kaffees zur Engstelle (14) hin konisch verjüngt und sich im Anschluss an die Engstelle (14) konisch erweitert.

2. Brüheinheit nach Anspruch 1, **dadurch gekennzeichnet, dass** der Engstelle (14) in Strömungsrichtung unmittelbar nachgeschaltet die Querschnittsfläche gegenüber der Querschnittsfläche innerhalb der Engstelle (14) sprunghaft oder quasi sprunghaft vergrößert ist.

3. Brüheinheit nach Anspruch 1 oder 2, **dadurch gekennzeichnet, dass** die Heißwasserzuführung (7) eine Engstelle (10) aufweist.

4. Brüheinheit nach Anspruch 3, **dadurch gekennzeichnet, dass** die Engstelle (10) in einem Leitungsstück angeordnet ist, dessen eines Ende unmittelbar oder quasi unmittelbar in der Brühkammer (6) der Brüheinheit (1) mündet.

5. Brüheinheit nach Anspruch 3 oder 4, **dadurch gekennzeichnet, dass** die Engstelle (10) diejenige Stelle innerhalb der Heißwasserzuführung mit der geringsten Querschnittsfläche ist.

6. Brüheinheit nach einem der Ansprüche 3 bis 5, **dadurch gekennzeichnet, dass** die Heißwasserzuführung (7, 9) sich in Strömungsrichtung des Heißwassers zur Engstelle (10) hin konisch verjüngt und sich im Anschluss an die Engstelle (10) konisch erweitert.

7. Kaffeemaschine, ausgerüstet mit einer Brüheinheit mit einer beim Brühvorgang das gemahlene Kaffeepulver enthaltenen Brühkammer, mit einer in die Brühkammer mündenden, durch eine Pumpe beaufschlagte Heißwasserzuführung und mit einer den gebrühten Kaffee abführenden Kaffeeauslaufleitung (12), **dadurch gekennzeichnet, dass** die Brüheinheit die Merkmale eines oder mehrerer der Ansprüche 1 bis 6 aufweist.

## Claims

1. Infusion unit (1) for a coffee machine with an infusion chamber (6) that contains the ground coffee powder during the infusion process, with a hot water inflow (7, 9) discharging into the infusion chamber (6) and with a coffee outflow draining off the infused coffee (12) with a turned-on crema valve (13) within, where the coffee outflow has a constricted point (14) below the crema valve (13), **characterised by** the coffee outflow (12) tapering in the direction of the flow of the coffee to the constricted point (14) and widening after passing the constricted point (14).

2. Infusion unit as per claim 1, **characterised by** the cross-section immediately downstream of the constricted point (14) in the direction of flow being increased by stages or quasi by stages compared to the cross-section within the constricted point (14).

3. Infusion unit as per Claim 1 or 2, **characterised by** the hot water inlet (7) having a constricted point (10).

4. Infusion unit as per Claim 3, **characterised by** the constricted point (10) being arranged in a pipe section, the one end of which discharges directly or quasi directly into the infusion chamber (6) of the infusion unit (1).

5. Infusion unit as per Claim 3 or 4, **characterised by** the constricted point (10) being the point within the hot water inlet with the narrowest cross-section area.

6. Infusion unit as per one of the Claims 3 through 5, **characterised by** the hot water inflow (7, 9) tapering in the direction of the flow of the hot water to the constricted point (10) and widening from the constricted point (10).

7. Coffee machine, equipped with an infusion unit with an infusion chamber containing the ground coffee powder during the infusion process, with a hot water inflow pressurised by a pump and discharging into the infusion chamber and with a coffee outflow (12) draining off the infused coffee, **characterised by** the infusion unit displaying the features of one or more of the Claims 1 through 6.

## Revendications

1. Unité d'échaudage (1) pour une machine à café comprenant une chambre d'échaudage (6) contenant la poudre de café moulu lors du processus d'échaudage, comprenant une arrivée d'eau chaude (7, 9) débouchant dans la chambre d'échaudage (6) et comprenant un conduit de sortie du café (12) intégrant une soupape à crème (13) destiné à évacuer le café échaudé, lequel conduit de sortie du café présente, à l'aval de la soupape à crème (13) un étranglement (14), **caractérisée en ce que** le conduit de sortie du café (12) se rétrécit de manière conique en direction de l'étranglement (14), dans le sens d'écoulement du café et qu'il s'élargit de façon conique à la suite de l'étranglement (14).

2. Unité d'échaudage selon la revendication 1 **caractérisée en ce que** directement à l'aval de l'étranglement (14), dans le sens de l'écoulement, la superficie de la section par rapport à la superficie de la section à l'intérieur de l'étrangement (14) est agrandie brusquement ou quasiment brusquement.

3. Unité d'échaudage selon la revendication 1 ou 2 **caractérisée en ce que** l'arrivée d'eau chaude (7) présente un étranglement (10).

4. Unité d'échaudage selon la revendication 3, **caractérisée en ce que** l'étranglement (10) est disposé dans un tronçon de conduit dont l'une des extrémités débouche directement ou quasi directement dans la chambre d'échaudage (6) de l'unité d'échaudage (1).

5. Unité d'échaudage selon la revendication 3 ou 4 **caractérisée en ce que** l'étranglement (10) est l'endroit dans l'arrivée d'eau chaude qui présente la plus faible superficie de la section.

6. Unité d'échaudage selon l'une des revendications 3 à 5, **caractérisée en ce que** l'arrivée d'eau chaude (7, 9) se rétrécit de façon conique dans le sens de l'écoulement de l'eau chaude vers l'étranglement (10) et qu'à la suite de l'étranglement (10), elle s'élargit de façon conique.

7. Machine à café équipée d'une unité d'échaudage comprenant une chambre d'échaudage contenant la poudre de café moulu lors du processus d'échaudage, comprenant une arrivée d'eau chaude alimentée par une pompe, débouchant dans la chambre d'échaudage et comprenant un conduit de sortie du café (12) destiné à évacuer le café échaudé **caractérisée en ce que** l'unité d'échaudage présente une ou plusieurs caractéristiques des revendications 1 à 6.
